# EUROPEAN PATENT APPLICATION

(11) **EP 4 480 924 A1**
(43) Date of publication of application: **25.12.2024**
(21) Application number: 23180253.9
(22) Date of filing: 20.06.2023
(51) Int. Cl.: C02F 1/467, C25B 1/26, C25B 1/34, C25B 11/052, C25B 11/053, C25B 11/061, C25B 11/063, C25B 11/077, C25B 11/081, C25B 11/091, C25B 11/093, C02F 1/76

(54) **CATALYTIC ANODES AND PROCESSES FOR USE IN ELECTRO-CHLORINATION**

(71) Applicant: Infineum International Limited, Abingdon Oxfordshire OX13 6BB (GB)
(72) Inventor: Schwarz, Andrew, Abingdon, OX13 6BD (GB); Choi, Zungsun, 098632 Singapore (SG); Lee, ChoongHyuk, Daejeon (KR); Choi, Jaeho, Daejeon (KR); Kim, Young, Daejeon (KR); Nam, Ki Tae, 08826 Seoul (KR); Choi, Seungwoo, 08826 Seoul (KR); Cho, Kang Hee, 08826 Seoul (KR); Lee, Chang Hyun, 08826 Seoul (KR); Lee, Jun-Seo, 08826 Seoul (KR)
(74) Representative: Hart, Richard Joseph

(57) **Abstract**

The present invention relates to a process for preparing catalytic anodes for use in electro-chlorination systems which generate chlorine from aqueous solutions via the chlorine evolution reaction. These anodes comprise an electrically conductive metallurgical layer essentially comprising ruthenium, tin and titanium. The desired characteristics of this metallurgical layer may be realised via a process of preparation employing specific control of reactants and process conditions.

## Description

The present invention relates to catalytic anodes for use in electro-chlorination systems which generate chlorine from aqueous solutions containing chloride ions, via the chlorine evolution reaction. Such chlorine-generating systems are especially useful in the industrial treatment and purification of waste water, such as ballast water treatment systems and industrial and municipal water. They may also particularly be utilised in the industrial production of chlorine in the chlor-alkali process.

The chlorine evolution reaction ("CER") is a well-known reaction in industrial chemistry, which finds application in both the large-scale generation of chlorine for capture, and in the generation of chlorine for immediate applications. The chlor-alkali process generates chlorine and sodium hydroxide through the electrolysis of sodium chloride aqueous solutions; the products are recovered and put to subsequent industrial use. Chlorine is also an effective biocide, and consequently electro-chlorination systems are also independently used for water purification based on *in situ* generation of aqueous chlorine and its biocidal effect. Microbially-contaminated water can be effectively treated by electro-chlorination, which is deployed in a variety of settings such as industrial waste water and general water sanitation. In addition, ships increasingly carry on-board ballast water treatment systems to treat ballast tank water before discharge. Ships travelling long distances having the potential to introduce alien aquatic organisms into local ecosystems via the discharge of ballast water acquired far away. The invading alien species can cause considerable impact to local ecosystem balance. Electro-chlorination systems driven by electrical generators on board the ship offer an effective and immediate solution for treating such water before discharge.

The effective industrial use of electro-chlorination systems and processes relies on an electrolytic cell that can operate efficiently for extended periods. To promote the generation of chlorine at the anode, it is common in the art to deploy catalytic coatings on the electrolyte-facing surface of the anode to catalyse the chlorine evolution reaction. Such catalytic coatings typically comprise significant amounts of one or more precious metals, of which the most commonly used are iridium and ruthenium, thereby adding significant cost and complexity to anode manufacture. There remains in the art an ongoing need for new catalytic anodes which can more cost-effectively meet the various technical considerations relevant to an industrial or municipal electro-chlorination environment.

In selecting catalytic coatings for electro-chlorination anodes, a variety of technical considerations must be taken into account.

Firstly, the catalyst chosen must be sufficiently selective for the chlorine evolution reaction, so as to reduce the loss of efficiency that results from the competing oxygen evolution reaction, which can otherwise also occur at the anode from the electrolytic splitting of the water in aqueous solutions. Secondly, the catalytic coating must be sufficiently durable to withstand long-term operation and the acidification of electrolyte that can occur with electro-chlorination. Durability also requires good mechanical adhesion of the catalyst to the anode substrate surface. Thirdly, the anode coating should be highly conductive, to improve electrical efficiency by avoiding the need for large over-potentials to drive the electrolytic cell. In practice, some degree of overpotential is typically evident in electrolytic cells due to efficiency losses; lower degrees of over-potential, however, provide important relative efficiency gains, and the maintenance of lower over-potentials over extended operation provides another relevant measure of electrode durability and useful lifetime.

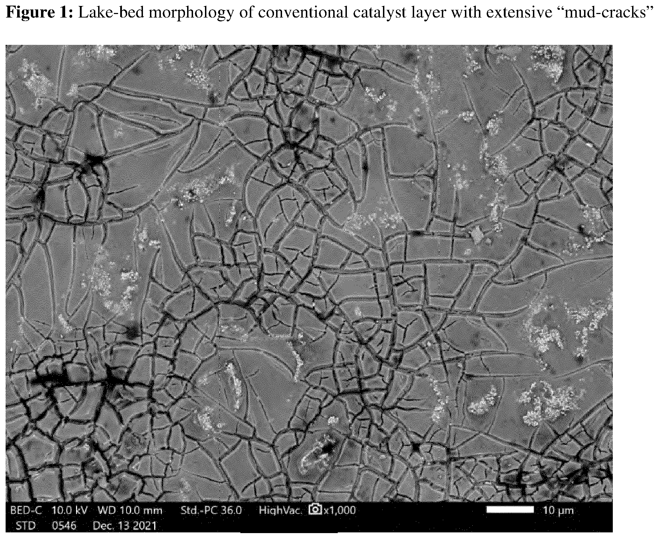

The physical durability of the catalytic coating on the anode can be assessed both by its performance in long-term tests and also by inspection of its morphology, most suitably by scanning electron microscopy. In practice, catalytic anode coatings in the art typically show an outer surface morphology that resembles a dry lake-bed, having the appearance of finely-deposited sediment extensively interrupted by characteristic "mud-cracks" as illustrated in Figure 1. These cracks provide weak points in the catalyst layer, and allow the penetration of electrolyte and reactive species down towards the substrate of the anode, resulting in degradation processes that weaken the adhesion of the catalyst to the substrate and attack the exposed compositions. Loss of electrical efficiency (as evidenced, for example, by increases in over-potential) and loss of catalytic activity typically result and reduce the useful life of the anode, leading to costly replacement.

The catalytic obtainable by the process of the first aspect of the invention provide an advantageous balance of properties addressing these technical demands of such anodes, whilst avoiding the need for significant amounts of costly precious metals, especially iridium. In particular, the catalyst-coated anode structures defined in the first aspect of the present invention show high catalytic activity and selectivity for the chlorine evolution reaction, show excellent durability in terms of operating lifetime and mechanical adhesion of the catalyst to the anode surface, and show improved resistance to acids formed during operation. They also possess high anode conductivity, resulting in efficient electrical operation without excessive over-potential, maintained over extended running periods.

These advantages of the anode made by the first aspect of the present invention result from the presence of an electrically conductive metallurgical layer of defined composition overlying the electrolyte-facing surface of the anode. This metallurgical layer is best realised via a process of preparation employing the control of reactants and process conditions defined in the present invention.

The present invention accordingly provides, in a first aspect, a process for the preparation of a catalytic anode structure for use in an electro-chlorination system, comprising the following sequential steps:
a) the preparation or obtention of an electrically conductive solid substrate;
b) the application, to the electrolyte-facing surface of the substrate, of an electrically conductive metallurgical composition (i) comprising compounds of ruthenium, tin and titanium in amounts providing the composition (i) with the overall metallic stoichiometry Ru_{≥0.3} (Sn+Ti)_{≤0.7};

wherein the process solvent used for applying the metallurgical composition in step (b) is a mixture of isopropanol and water in the ratio range of 80:20 to 95:5 by volume; and
wherein the resulting structure is thereafter dried, and then heat-treated at a temperature of at least 450°C.

The process of the first aspect of the invention prepares a catalytic anode structure for use in an electro-chlorination system comprising an electrically conductive solid substrate overlaid, on its electrolyte-facing surface, with an electrically conductive metallurgical layer, this layer having the morphology of aggregated particles interspersed with voids, and comprising metal oxide compounds of ruthenium, tin and titanium, wherein the ruthenium and tin are present in amounts providing the metallurgical layer with an overall metallic stoichiometric ratio for Ru : Sn of 1 : ≥1 based on the total content of ruthenium and tin in the metallurgical layer.

Within this specification, the term "atom% of the total metal atom content" in relation to a specified metal in a composition refers to the number of atoms of that metal that are present in the relevant composition, expressed as the percentage of the total number of atoms of metallic elements that are present in the relevant composition, and irrespective of whether such metallic elements are present in elemental or compound form.

Within this specification, the term "overall metallic stoichiometric ratio" for particular metallic elements means the stoichiometric ratio of all atoms of those metallic elements present within the composite metallurgical layer (or other composition, where applicable), irrespective of whether such metallic elements are present in elemental or compound form. For example, in a structure containing 15 atom% of ruthenium and 15 atom% of tin in purely elemental form, the overall metallic stoichiometric ratio for Ru : Sn is 15:15 or 1:1; and in a structure containing 15 atom% of ruthenium in the form of elemental ruthenium, 15 atom% of elemental tin, and a further 15 atom% of tin compounded in oxide form, the overall metallic stoichiometric ratio for Ru : Sn is 15 : (15+15) or 1:2.

Within this specification, the term "morphology" is used to denote the three-dimensional structure and appearance of the material in question. The morphology can most usefully be identified by scanning electron microscopy as hereinafter described, which provides three-dimensional imaging of the material surface in a way that allows direct visual recognition of its structure and appearance.

The present invention is based, in part, on the finding that an anode structure having excellent properties for obtaining the CER reaction in electro-chlorination can be advantageously obtained through the process of the invention, the process providing a metallurgical layer on the anode surface directly exposed to the electrolyte, this layer comprising tin in combination with ruthenium and titanium. The metallurgical layer on the anode provides the anode with a surface chemical composition and advantageous morphology that achieves excellent durability, in terms of operating lifetime and mechanical adhesion to the anode substrate, and offers advantageous catalytic activity and selectivity for the chlorine evolution reaction. The metallurgical layer also offers the anode high resistance to acid attack, and a high conductivity leading to high electrical efficiency and operating performance at low over-potentials for extended periods. The use of tin in the structural base composition also enables this anode performance to be reached at substantially lower costs than conventional catalytic anodes based on iridium and/or larger quantities of ruthenium as the predominant components.

In particular, the metallurgical layer composition essentially comprises the combination of ruthenium, tin and titanium in metal oxide form, wherein the presence of a minimum proportion of ruthenium and the co-presence of tin in a stoichiometric amount equal to or exceeding the amount of ruthenium, in combination with titanium, provides a composition capable of forming a structure having the morphology of aggregated particles interspersed with voids, as further demonstrated hereunder. Contrary to the conventional thinking in the art concerning barrier layers, the particulate morphology of this composition contributes to improved mechanical adhesion of the metallurgical layer onto the substrate, resulting in a highly adherent layer on the electrolyte-facing surface of the anode having the above-described advantageous combination of properties for the chlorine evolution reaction.

The aggregated particles on the outer surface of the morphological layer are also essential for providing a highly effective and available surface area for catalytic activity. In particular, this particulate morphology overcomes the mass transfer limitations of conventional lake-bed sedimentary catalyst layers, enabling the catalytic anodes of the invention to operate a higher efficiency for the chlorine evolution reaction and contributing to their various advantages.

The efficiency advantage in the chlorine evolution reaction for the catalytic anode prepared by the process of the present invention is particularly demonstrated with aqueous solutions of chloride ions (such as brine) having low salt levels. Increased efficiency at low salt levels provides an electrode with wide suitability for water treatment, for example in municipal water applications or for treating drinking water, in addition to the treatment of waste water and other chlorination applications. The increased efficiency also results in lower levels of unwanted electrolysis by-products such as chlorate and perchlorate ions.

The formation of the catalytic anode structure is realised through a process which adds the metallurgical layer under process conditions ideally favourable to the formation of the correct morphology of the composition.

The process of the first aspect is particularly characterised by its use of a particular starting metallurgical composition and preparative conditions, which give rise to the desired anode structures.

Firstly, the use of an electrically conductive metallurgical composition (i) comprising compounds of ruthenium, tin and titanium in amounts providing the starting composition (i) with the overall metallic stoichiometry Ru_{≥0.3} (Sn+Ti)_{≤0.7} gives rise, under the process conditions of the invention, to the metallurgical layer of the anode which provides the advantageous catalytic performance. The defined overall metallic stoichiometry of the starting composition (i) particularly results in the desired morphology of the resulting layer, being a layer having the morphology of aggregated particles interspersed with voids. This formation of the desired morphology is further assisted by the use of the defined process solvent and, in some preferred embodiments, by the anode substrate being heated during the application step (b) to a temperature in the range of 50-200°C

During the application step (b), the use of process solvent volatile under that condition further enables the formation of voids in the metallurgical layer. This solvent also results in the concomitant loss of a certain proportion of more volatile metallic salts contained within the defined metallurgical content of the starting composition (i), resulting in the formation of a metallurgical layer with overall metallic stoichiometry different in respect of ruthenium, tin and titanium to that of the starting composition (i). The use of the defined composition (i) and the defined process conditions is believed to advantageously accommodate for this concomitant metal salt volatility loss, and results in the formation of an applied metallurgical layer having the desired composition and morphology.

In a preferred embodiment, applying the metallurgical composition (i) to a substrate that is heated to the specified temperature range of 50-200 °C during that application process (and preferably heated to that temperature range throughout that application process) has been found to further enhance the formation of the desired metallurgical layer on the anode.

The drying of the resulting structure at the same temperature range of of 50-200 °C has also been found to further enhance the formation of the desired metallurgical layer, in particular by favouring the formation of the desired morphology of a continuous layer uninterrupted by mud-cracks or other significant penetrating discontinuities.

The final heat-treatment of the resulting structure at a temperature of at least 450°C has importantly been found essential to enhance the formation of the desired metallurgical layer, in particular by favouring the improvement in mechanical adhesion of the metallurgical layer to the anode substrate, and by favouring high selectivity for the chlorine evolution reaction over the oxygen evolution reaction from water splitting. In this regard the second aspect of the invention prefers a final heat-treatment in the range of 450 to 600°C, and especially an optimal final heat-treatment at 500°C, wherein higher selectivity for the chlorine evolution reaction and mechanical adhesion is observed.

The first aspect of the invention also essentially requires the use of a specified process solvent for applying the metallurgical compositions in step (b), this process solvent being a mixture of isopropanol and water in the ratio range of 80:20 to 95:5 by volume, and preferably in the ratio range of 82.5:17.5 to 87.5 to 12.5 by volume. Most preferably, the process solvent is a mixture of isopropanol and water in the ratio of 85:15 by volume. This composition of process solvent has been found to show advantages over similar alcoholic solvents for solvency of the starting compounds used in the process of the first aspect. In addition, this composition of process solvent has been found to advantageously control the surface morphology of the layer formed by the application of the metallurgical composition, both before and after the final heat-treatment step, and in particular contributes to the aggregated particulate morphology, free of integrity-weakening cracks. This ability to control layer morphology is particularly attributed to the choice of alcohol and the ratio of alcohol to water in the process solvent, and is optimally controlled at the volume ratio of 85:15 (isopropanol:water).

A further aspect of the present invention is also described herein, and concerns an electrolytic process for the catalytic evolution of chlorine gas from an aqueous solution containing chloride ions, which comprises passing an electrical current through said solution in an electrolytic cell comprising the electrolytic anode structure obtainable by the process of the second aspect, wherein chlorine gas is evolved from the aqueous solution at the anode.

In a preferred aspect of the electrolytic process, the chlorine gas evolved by the process is used as a biocide to disinfect water, and more especially used to disinfect ballast water or industrial waste water, or municipal or domestic water, such as recreational water in swimming pools and domestic drinking water. In an alternative preferred aspect, the process is a chlor-alkali process for the generation and recovery of chlorine.

The invention will now be described in more detail as follows:

### Brief description of the Figures

This application contains the following figures:
**Figure 1****:** Lake-bed morphology of conventional catalyst layer with extensive "mud-cracks";
**Figure 2****:** Aggregated particulate morphology of the anode surface (comparative anode, and anode of the invention); and
**Figure 3****:** Lifetime tests - effect of ruthenium stoichiometry in composition (i) of the process of the invention on metallurgical layer durability.

### First aspect of the invention (process of preparation)

The first aspect provides a process for the preparation of a catalytic anode structure for use in an electro-chlorination system, comprising the following sequential steps:
a) the preparation or obtention of an electrically conductive solid substrate; and
b) the application, to the electrolyte-facing surface of the substrate, of an electrically-conductive metallurgical composition (i) comprising compounds of ruthenium, tin and titanium in amounts providing the composition (i) with the overall metallic stoichiometry Ru_{≥0.3} (Sn+Ti)_{≤0.7}

wherein the process solvent used for applying the metallurgical compositions in step (b) is a mixture of isopropanol and water in the ratio range of 80:20 to 95:5 by volume; and
wherein the resulting structure is thereafter dried, and then heat-treated at a temperature of at least 450°C.

The process of the invention obtains the catalytic anode structure defined below, and is the preferred process for preparing the anode of this kind.

The temperature conditions and process solvent defined in the process are important to obtaining the desired catalytic anode structure.

In the process, the resulting structure is heat-treated at a temperature in the range of at least 450°C, and preferably heat-treated at a temperature in the range of 450 to 600°C, such as 450°C to 550°C. More preferably, the resulting structure is heat-treated at a temperature in the range of 475 to 525°C, and optimally at a temperature of 500°C.

The process of the invention also requires the use of a specified process solvent for applying the metallurgical composition in step (b), this process solvent being a mixture of isopropanol and water in the ratio range of 80:20 to 95:5 by volume, and preferably in the ratio range of 82.5:17.5 to 87.5:12.5 by volume. Most preferably, the process solvent is a mixture of isopropanol and water in the ratio of 85:15 by volume.

This composition of process solvent has been found to show advantages over similar alcoholic solvents for solvency of the starting compounds used in the process of the first aspect. In addition, this composition of process solvent has been found to advantageously control the surface morphology of the layer formed by the application of the metallurgical composition, both before and after the final heat-treatment step, and in particular contributes to obtaining an aggregated particulate morphology to the resulting metallurgical layer, and more preferably free of integrity-weakening cracks. This ability to control layer morphology is particularly attributed to the choice of alcohol and the ratio of alcohol to water in the process solvent, and is optimally controlled at the volume ratio of 85:15 (isopropanol:water).

Preferably, in the process of the invention, the anode substrate (a) is heated to a temperature in the range of 55-200°C during step (b), and the resulting structure is thereafter dried at a temperature within the same range. Preferably, the heating of the anode substrate to this temperature range is conducted throughout step (b), and the resulting structure is thereafter dried at a temperature within the same range. Optimally, the substrate (a) is heated to a temperature of 100°C throughout step (b), and the resulting structure thereafter dried at that temperature.

During the application step (b) of the process, the use of the defined process solvent volatile under that condition, and where present the heat treatment of the substrate, enables the formation of voids in the resulting metallurgical layer.

In particular, applying the metallurgical composition (i) to a substrate that is preferably heated in accordance with the second aspect of the invention has been found to enhance the formation of the desired metallurgical layer on the anode. The drying of the resulting structure at the same temperature range has also importantly been found to enhance the formation of the desired metallurgical layer, in particular by favouring the formation of the desired morphology of a continuous layer, and especially one uninterrupted by mud-cracks or other significant penetrating discontinuities.

The essential final heat-treatment of the resulting structure at a temperature of at least 450°C has importantly been found to enhance the formation of the desired metallurgical layer, in particular by favouring the improvement in mechanical adhesion of the metallurgical layer to the anode substrate, and by favouring high selectivity for the chlorine evolution reaction over the oxygen evolution reaction from water splitting. In this regard the process of the invention prefers a final heat-treatment in the range of 450 to 550°C, and especially an optimal final heat-treatment at 500°C, wherein higher selectivity for the chlorine evolution reaction and mechanical adhesion is observed.

The use in the process of the above-defined temperature conditions and process solvent, in combination with the defined metallurgical content of the starting composition (i), results in the formation on the anode substrate of a metallurgical layer having the desired composition and morphology, suitable for use as the catalysed anode.

In the process of the first aspect, composition (i) applied in step (b) comprises compounds of ruthenium, tin and titanium in amounts providing the composition (i) with the overall metallic stoichiometry Ru _{≥ 0.3} (Sn+Ti) _{≤ 0.7}. Composition (i) is the starting composition for the metallurgical layer on the anode, and it is important in the process of the present invention that the ruthenium content of composition (i) is stoichiometrically at the level of 0.3 or above (corresponding to 30 atom%) relative to the tin and titanium present in the composition in order to arrive at the desired layer structure. It has been found that the durability of the resulting composition is much improved when the ruthenium is at or above this level in the starting composition (i), when applied according to the process of the first aspect. In addition, the ruthenium assists with the overall conductivity of the composition.

In this regard, it is preferred that composition (i) applied in step (b) of the process comprises compounds of ruthenium, tin and titanium in amounts providing the composition (i) with the overall metallic stoichiometry Ru_{0.3} (Sn+Ti)_{0.7}. This level of ruthenium is considered optimal in the composition (i) of the process of the invention, giving rise to a particularly efficient and durable anode structure.

The combined presence of tin and titanium in addition to ruthenium in the composition (i) results in the formation, via its application in the process, of a metallurgical layer composition having the desired morphology of aggregated particles and an absence of the extensive mud-cracking behaviour seen in other compositions comprising ruthenium with only titanium or tin alone. In this respect, the minimum level of 30 atom% of ruthenium relative to tin and titanium in the starting composition (i) also leads, under the conditions of the process, to the enhanced formation of the network of aggregated particles in the morphology of the resulting composition, and a lack of cracking behaviour.

The presence of tin in composition (i) in combination with ruthenium and titanium also importantly contributes to an increase in long-term durability of the anode prepared according to the process, and gives rise to an increase in the mechanical adhesion of the metallurgical layer to the anode substrate. The tin content within composition (i) can be further adjusted to provide the resulting anode with the desired overall stoichiometric ratio of Ru : Sn in the final anode structure, and desired performance in this regard.

In order to optimise these advantages, it is preferred that the tin and titanium be present in approximately equal quantities within composition (i). Most preferably therefore, composition (i) applied in step (b) comprises compounds of ruthenium, tin and titanium in amounts providing the composition (i) with the overall metallic stoichiometry Ru_{0.3}Sn _{≥ 0.3}Ti _{≤ 0.4}, and optimally Ru_{0.3}Sn_{0.35}Ti_{0.35}.

In all the above embodiments of the process, whilst minor amounts of other metallic compounds may be present in addition to the essential compounds of ruthenium, tin and titanium it is preferred that composition (i) consist essentially of compounds of ruthenium, tin and titanium, and more preferred that composition (i) consist of compounds of ruthenium, tin and titanium, preferably in amounts providing the composition (i) with the overall metallic stoichiometry Ru_{0.3} (Sn+Ti)_{0.7}, and most preferably with the overall metallic stoichiometry Ru_{0.3}Sn_{0.35}Ti_{0.35}

In the process of the first aspect, further metallurgical compositions may be applied to the surface of the metallurgical layer resulting from the application of composition (i), for example as auxiliary catalyst compositions for specific applications, provided that such auxiliary compositions do not inhibit the primary role and benefits of the layer resulting from the application of composition (i).

The composition (i) for use in the process of the first aspect may be prepared from compounds known in the art for the purpose of metal oxide catalyst preparation, mixed together in the appropriate ratios according to the teaching of the invention in the presence of the process solvent. Whilst such compounds may include the relevant metal oxide compounds where practical, typically other compounds are used that allow better mixing or suspension and will oxidise under the subsequent heat-treatment of the process to give rise *in situ* to the desired metal oxides.

Thus, it is preferred in the process that the ruthenium, tin, and titanium compounds present in composition (i) each comprise compounds other than oxide compounds; and wherein their heated application in process step (b), followed by drying and heat-treatment, thermally decomposes these compounds into one or more of their respective metal oxide or mixed metal oxide compounds within the composite metallurgical layer of the final anode structure.

In this regard, the ruthenium, tin and titanium compounds present in composition (i) preferably comprise, and more preferably consist of, their respective halide compounds, and/or complexes with acetylacetone. Such compounds provide for suitable dispersion of the metals in the composition used in the process, and subsequently convert to their respective oxides under the conditions of the process of the invention to give rise to the desired anode of the invention.

The starting composition (i) for the process may additionally comprise other metal compounds bringing further advantages to the resulting anodes.

Thus, the starting composition (i) may additionally comprise at least one compound of palladium, in an amount providing an overall palladium content of preferably at most 7 atom%, and preferably at most 5 atom% based on the total metal atom content of the starting composition.

The composition (i) may additionally comprise at least one compound of copper, or at least one compound of aluminium, or at least one compound of nickel, or more than one of the above, in amounts respectively providing composition (i) with an overall copper content of at most 10 atom% , and preferably at most 2 atom% based on the total metal atom content of the composition, or an overall aluminium content of at most 30 atom%, and preferably at most 20 atom% based on the total metal atom content of the composition, or an overall nickel content of at most 15 atom%, and preferably at most 10 atom% based on the total metal atom content of the composition,.

The composition (i) may additionally comprise at least one compound of iridium, in an amount respectively providing an overall iridium content of at most 15 atom%, and preferably at most 10 atom%.

These additional metallic species may be introduced via their compounds conventionally used in the art for inclusion in metallurgical coatings.

In the process of the invention, the electrically conductive solid substrate consists essentially of a valve metal, preferably titanium, as detailed under the first aspect of the invention.

In the process of the invention, the metallurgical composition applied in step (b) may be sequentially applied by coating techniques known in the art, such as brush, roller or drawdown application, spray coating by means such as electro-spraying or pressure spraying, dip coating and curtain coating. Thicker coatings may be applied here required, by the coating technique making multiple passes over the underlying structure.

Preferably, the metallurgical composition applied in step (b) is sequentially applied by brush-coating in one or more passes over the underlying structure, or by spray-coating in one or more passes over the underlying structure. However, other conventional techniques may also be used to apply one or more of the metallurgical compositions.

The anode obtained by the process of the first aspect comprises an electrically conductive solid substrate overlaid, on its electrolyte-facing surface, with an electrically conductive catalytic metallurgical layer having the morphology of aggregated particles interspersed with voids, and comprising metal oxide compounds of ruthenium, tin and titanium; wherein the ruthenium and tin are present in amounts providing the metallurgical layer with the overall metallic stoichiometric ratio for Ru:Sn of 1 : ≥1, based on the total content of ruthenium and tin in the metallurgical layer.

These anode structures possess the characteristic that the outer surface of the metallurgical layer has the morphology of aggregated particles. The presence of occasional cracks or other surface discontinuities or fault lines is not excluded, where such imperfections do not expose the underlying substrate to electrolyte attack. Preferably, however, the anode structures possess a metallurgical layer having the outer surface morphology of a continuous, uncracked coating of aggregated particles, interspersed with voids that provide increased access to the surface of the particles.

The aggregated particulate morphology of the outer surface of the metallurgical layer contrasts with the extensively cracked sediment-like surface morphology of conventional catalytic anodes, and can best be visualised by examination under scanning electron microscopy, as illustrated in the accompanying Figures. In each case, the scanning electron micrographs were obtained using a JSM-IT500 InTouchScope^{™} Scanning Electron Microscope instrument, using the settings stated in the legend of the relevant Figure.

In Figure 1, scanning electron microscopy of the outer surface morphology of a conventional catalysed anode for electro-chlorination reveals a characteristic "mud-cracking" appearance, with extensive deep cracking radiating across the sediment-like surface coating. Such a morphology renders the catalytic surface prone to chemical attack and weakens its structural integrity, reducing its lifetime and usefulness.

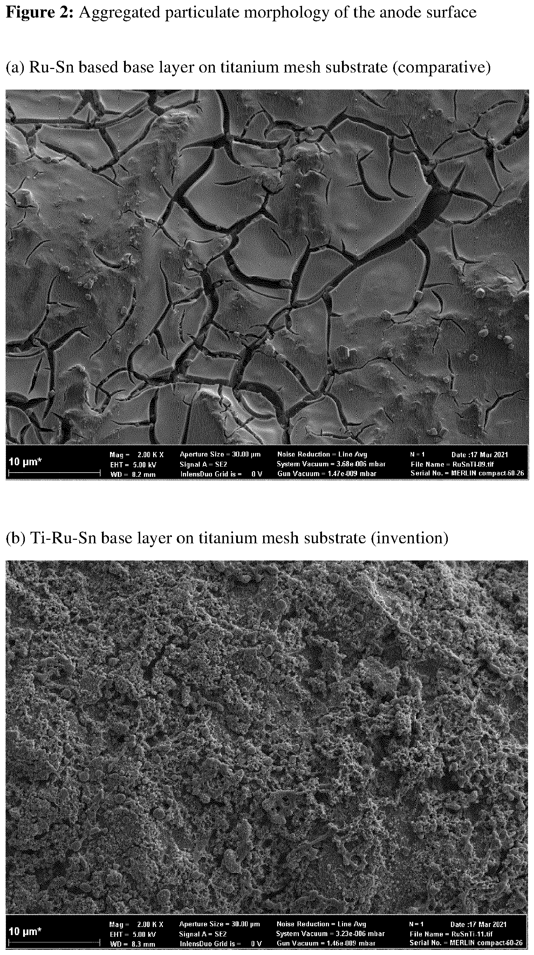

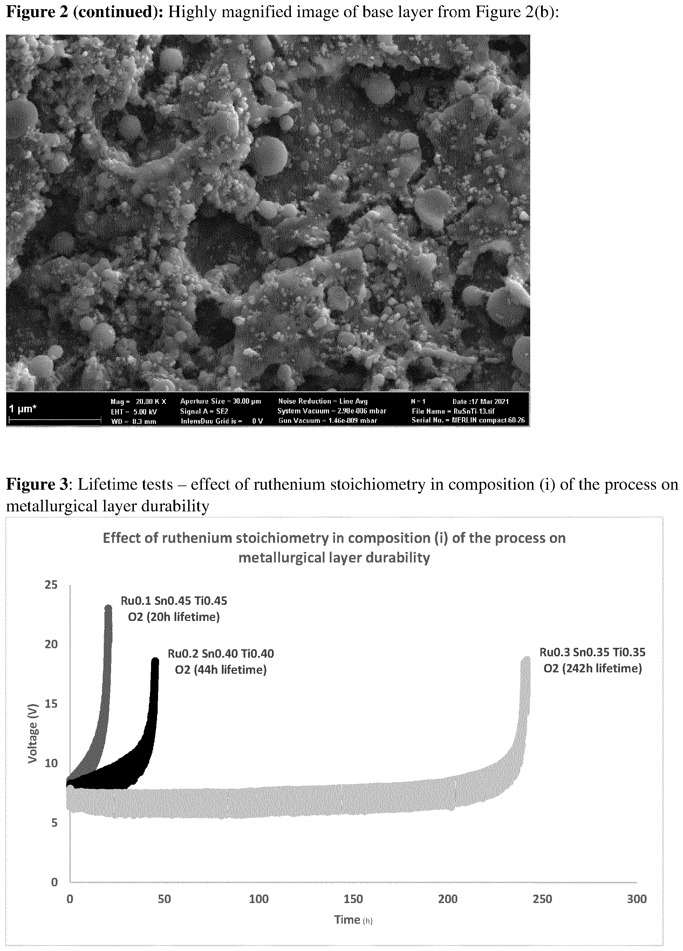

In contrast, in Figure 2, scanning electron microscopy illustrates the characteristic surface of the preferred catalysed anode comprising ruthenium, tin and titanium, with an uncracked, aggregated particulate morphology visible at the magnification shown. For further comparison, the cracked nature of a conventional ruthenium and tin (dimensionally stable anode) composition is also shown.

Essential to the anode is the presence, in combination with titanium, of ruthenium and tin in amounts providing the metallurgical layer with the overall metallic stoichiometric ratio for Ru : Sn of 1 : ≥1, based on the total content of ruthenium and tin in the metallurgical layer. An important finding of the invention is the advantageous use of tin in an overall stoichiometric quantity at least equivalent to the amount of ruthenium, which enables significant reduction in overall ruthenium content of the electrode coating whilst also contributing to the advantageous combination of properties shown by the metallurgical layer of the invention. In particular, the presence of the defined amount of tin assists with the mechanical integrity of the layer and its electrical conductivity.

The overall metallic stoichiometric ratio for Ru : Sn, based on the total content of ruthenium and tin in the metallurgical layer, is preferably 1 : ≥1.5, and more preferably 1 : ≥2. Even more preferably, the overall metallic stoichiometric ratio for Ru : Sn, based on the total content of ruthenium and tin in the metallurgical layer, is 1 : ≥3, and most preferably 1 : ≥5. Optimal values for this ratio in the present invention lie in the range of 1:8 to 1:20, for example in the range of 1:8 to 1:15.

The individual metal contents and overall metallic stoichiometry of the composite metallurgical layer can be measured by known techniques using ICP-MS (Inductively coupled plasma mass spectrometry in order to determine the compositional features of the invention.

In all the above embodiments of the anode resulting from the first aspect, the metallurgical layer may also comprise an auxiliary catalyst composition distributed on the upper surface of, and within the voids of the metallurgical layer. It is preferred that any such auxiliary composition does not comprise substantial or any amounts of precious metal oxides such as palladium or iridium, other than as provided herein.

Thus, the metallurgical layer may further comprise at least one compound of palladium in an amount providing an overall palladium content of at most 7 atom% of the total metal atom content of the composite metallurgical layer. The introduction of a limited quantity of palladium to the layer is preferably done via the inclusion of one or more palladium-based compounds in the composition (i), or via subsequent doping. The small quantity of palladium provides a further improvement in the efficiency of the chlorine evolution reaction, particularly for water treatment applications, as evidenced by an increase in low salt efficiency.

However, exceeding the upper limit of 7 atom% for palladium content in the composition results in no further improvement of the efficiency of the chlorine evolution reaction, especially for water treatment applications, as evidenced by no further increase in low salt efficiency. For this reason, the palladium content associated with the cobalt oxide catalytic particles should be limited to the stated level to avoid unnecessary cost and complexity. It is preferred that overall palladium content is at most 5 atom%, and more preferably at most 3%, of the total metal atom content of the metallurgical layer; and optimally the overal palladium content is at most 1.5 % of the total metal atom content of the metallurgical layer.

The anode of all embodiments resulting from the first aspect essentially consists of an electrically conductive solid substrate, which substrates are known in the art. This substrate preferably consists essentially of a valve metal, such as titanium, zirconium, niobium and tantalum (and alloys/mixtures containing these metals) and preferably titanium, and most preferably consists essentially of titanium. Mixtures of valve metals may be present in the substrate. Oxides of the valve metal or metals essentially present in the substrate may additionally be observed or produced as artifacts under the conditions of anode manufacture and use, particularly at the surface of the substrate or its interface with the composite metallurgical layer, and their presence is not excluded from the substrates of the invention provided that they do not form the primary compositional component of the substrate.

The anode substrate may be produced by means conventional in the art, and may be purchased or manufactured to order and be formed into any shape suitable for eventual application as an anode in an electrochemical cell or system. In particular, the substrate may be formed into meshes, plates and more complex three-dimensional shapes such as cylinders. The substrates may be coated by the composite metallurgical layer on one or more sides depending on their design and arrangement.

The metallurgical layer of all embodiments of the anode resulting from the process of the first aspect comprises metal oxide compounds of ruthenium, tin and titanium, and preferably consists essentially of metal oxide compounds of ruthenium, tin and titanium, to the desired stoichiometric ratio of Ru : Sn. The combination of these three metals is important to obtaining the correct morphology for the metallurgical layer composition *in situ* on the anode surface. Other metal oxides or other compounds may additionally present provided they do not adversely affect the morphology, however most preferably the composition consists of metal oxide compounds of ruthenium, tin and titanium.

In particular, the specific combination of ruthenium, tin and titanium provides a metallurgical layer exhibiting the desired particulate morphology and which is consequently also resistant to significant cracking, and is preferably crack-free, providing a resilient coating. In contrast, for example, a conventional coating composition based on ruthenium and tin typically illustrates a sediment-like "mud cracked" surface (as shown in Figure 2) and does not provide the same resilience.

Furthermore, the specific combination of ruthenium, tin and titanium in the layer composition provides improved durability for the anode resulting from the first aspect of the invention, when compared to layer compositions comprising only ruthenium and titanium, or ruthenium and tin. In this regard, the combination of both tin and titanium with ruthenium provides the anode with improved anode lifetime and improved mechanical adhesion, and further contributes to the advantages of the invention.

In adopting the process conditions of the first aspect of the invention, the application of a starting composition (i) having the metallic stoichiometry Ru_{≥0.3} (Sn+Ti)_{≤0.7} will arrive at a suitable overall stoichiometry for these metals within the metallurgical layer, and in regard to the process of the first aspect, it is important that the ruthenium is present to the stoichiometric level of at least 0.3 in the starting composition (i) to obtain the anode and advantages of the invention. Within this limitation the skilled person may, however, vary this starting composition 9i) to obtain a particular desired overall metallic stoichiometry.

The above-described embodiments of the anode may comprise, in addition to the above-described features, one or more further compositional elements introduced via the process for enhancing particular properties of the anode, provided the overall advantages of the invention are still obtained. For example, in the process to prepare the anode structure of any preceding embodiment, the composition (i) may additionally comprise a precious catalytic metal (in addition to any palladium, if present), and preferably iridium, in the form of its oxide or other catalytically-active species, in an amount providing an overall additional precious metal content, and preferably iridium content, of at most 15 atom% of the total metal atom content of the composite metallurgical layer, and preferably at most 10 atom%, more preferably at most 7 atom%. The optional presence of this small amount of precious metal, and especially iridium, may be favoured from the viewpoint of further enhancing catalytic performance of the anode, but should be limited in accordance with the object of the invention to minimise the use of costly precious metals. Accordingly, such amounts of precious metals are much lower than are typically used when basing a catalyst composition on such metals.

Alternatively, or in addition, the anode metallurgical layer of all embodiments may further comprise at least one compound of copper in an amount providing the metallurgical layer with an overall copper content of at most 10 atom%, and preferably at most 2 atom% of the total metal atom content of the metallurgical layer;;or at least one compound of aluminium in an amount providing the layer with an overall aluminium content of at most 30 atom%, and preferably at most 20 atom% of the total metal atom content of the metallurgical layer; at least one compound of nickel in an amount providing the layer with an overall aluminium content of at most 15 atom%, and preferably at most 10 atom% of the total metal atom content of the metallurgical layer; or more than one of the above. The additional presence of copper, aluminium or nickel within the metallurgical layer provides a further increase in the catalyst selectivity for the chlorine evolution reaction, as measured for example by the low salt efficiency.

### Second aspect of the invention (electrolytic process)

In a second aspect, the invention provides an electrolytic process for the catalytic evolution of chlorine gas from an aqueous solution containing chloride ions, which comprises passing an electrical current through said solution in an electrolytic cell comprising the electrolytic anode structure obtainable by the process of the first aspect, wherein chlorine gas is evolved from the aqueous solution at the anode.

In a preferred aspect of the electrolytic process aspect, the chlorine gas evolved by the process is used as a biocide to disinfect water, and more especially used to disinfect ballast water or industrial waste water, or municipal or domestic water, such as recreational water in swimming pools and domestic drinking water. In an alternative preferred aspect, the process is a chlor-alkali process for the generation and recovery of chlorine.

### Worked examples of the invention

### 1. Preparative examples

### Preparation of example starting compositions for the process of the invention

1.A An example starting composition (i) for use in step (b) of the process was prepared from the following component compounds and liquids, obtainable in the art:

### Crystalline solid compounds:

RuCl_{3.}xH₂O (available as an item of commerce, and obtained from Sigma-Aldrich),
SnCl_{4.}5H₂O (available as an item of commerce, and obtained from Sigma-Aldrich),
SbCl₃ (available as an item of commerce, and obtained from Sigma-Aldrich),

### Liquids:

2-propanol (also termed isopropanol, available as an item of commerce, and obtained from Alfa Aesar),
De-ionized water,
TiCl₃ solution (TiCl₃ available as an item of commerce, and obtained from Sigma-Aldrich Sigma-Aldrich, dissolved into a 12% solution in aqueous hydrochloric acid).

### 1.B Preparation of starting composition (i) of the process

A preferred composition (i) consisting essentially of ruthenium, tin and titanium compounds having the overall metallic stoichiometry Ru_{0.3}Sno_{0.35}Ti_{0.35} for use in the process to form the metallurgical layer was prepared according to the following sequence.

To a 70 mL vial was added RuCl₃.xH₂O (207.6 mg; 1mmol) and SnCl₄.5H₂O (409.4 mg; 1.17mmol). These solid materials were dissolved into the 2-propanol (17 ml) by vortexing, until no metal precursors settle out upon standing. To the resulting solution was added 1.5 mL of the TiCl₃ solution (12 % TiCl₃ in hydrochloric acid solution, 1.17mmol) by dropwise addition with mechanical stirring at 1,000 rpm. In addition, 1.5 ml of de-ionized water was added dropwise into the solution. The resulting solution was aged for 5 hours with mechanical stirring at 1,000 rpm under ambient conditions, to produce composition (i) for use in the process of the invention.

### Preparation of catalytic anode via the process of the invention

An anode was prepared according to the process of the first aspect of the invention, as follows.

A titanium mesh was sourced as the anode substrate and, after cleaning, heated to the temperature of 100°C using a heating plate. Whilst at this temperature, the above-prepared composition (i) was applied to the hot substrate surface by brush-coating. The resulting coated sample was held at 100°C for 1 minute the substrate with turned over and the reverse side coated again the substrate was held at 100°C for 1 minute. The coated sample was then transferred to a 500°C oven for 5 minutes. The coated sample was then transferred back to the to the hotplate at 100°C and the coating and heat treatment steps repeated. This brush-coating of the substrate surface with composition (i) was repeated four additional times, resulting in a total of five brush passes over the surface being coated.

The dried resulting structure was thereafter finally heat-treated in an oven for 1 hour at 500°C, followed by slow cooling within the oven over a period of 8 hours, to obtain the anode structure of the invention.

### 2. Performance examples

The performance and advantages of the anode of the invention were demonstrated using the following experimental technique.

### Chlorine Evolution Reaction (CER) Lifetime Test:

The Faradic Efficiency (FE) of the electrolytic cell measured regularly over long-term testing provides an important demonstration of the lifetime of the catalysed anode, and hence the durability of the anode for the CER reaction. A rapid increase in FE signals deterioration of the anode and indicates it is reaching the end if its durability for CER.

An electrolytic cell with counter and working electrodes was configured as described above. The working electrode (anode) was masked to 1 cm² to concentrate the current density for test acceleration purposes. The masking was done by applying silicon tape, overlaid by electroplating tape. The top of the working electrode was also ground back to the metal substrate before being connected.
a) 1 litre of 0.6 M NaCl solution was poured into a beaker surrounded by a cooling jacket, which maintained the test solution at 15°C. After allowing 1 hour for the temperature to stabilize, the above-assembled electrode cell was placed within the beaker, and two electric wires connected to the working electrode and the counter electrode respectively.
b) The solution was stirred at 300 rpm using a magnetic stirring bar. An attached potentiostat was then operated in the chrono-potentiometry mode at 500 mA/cm² under the 300 rpm stirring condition until an increase beyond 12V was recorded, which point was taken as the duration result for the experiment.
c) During operation, the potential of the cell was repeatedly measured and plotted over time, to report the potential for CER over the duration of the lifetime test, and identify the deterioration point at which the potential rapidly increased and the useful life of the anode was exceeded (deemed when a voltage over 12V was recorded).

### 2.1 Benefit of composition (i) of the invention

The metallurgical layer of the anode originates, in the accompanying process of the first aspect of the invention, from a composition (i) comprising compounds of ruthenium, tin and titanium in amounts providing the composition (i) with the overall metallic stoichiometry Ru_{≥0.3} (Sn+Ti) _{≤0.7}. The importance of these defined features in the process of the invention was demonstrated as follows.

Figure 3 reports the results of CER lifetime tests conducted according to the test methodology described above. In each case, the working electrode (anode under test) was prepared analogously to the preparative method set out in section 1 of the examples. Three examples of this type were prepared by varying the amount of ruthenium added to the composition (i), and maintaining the tin and titanium components at a 1:1 stoichiometric ratio as the balance of each composition.

As shown in Figure 3, the CER lifetime results show the maintenance of a low over-potential for an extended period (corresponding to excellent lifetime for the catalytic performance of the anode) was not achieved where ruthenium was present to the stoichiometric level below 0.3. To avoid the layer composition weakening and affecting the efficiency and durability of the catalysed anode towards the CER reaction, the specified stoichiometry is therefore required in which the ruthenium is present in at least the stoichiometric level of 0.3 in the composition (i).

This ruthenium stoichiometry also ensures the obtention of the desired morphology for the composition, as a layer of aggregated particles interspersed with voids. A ruthenium stoichiometry of 0.3 in composition (i) resulted in a structure showed a defined crystalline structure by XPS and defined, connected particles when imaged using SEM.

SEM examination after application of metallurgical coatings as illustrated in Figure 2 also revealed, in the case of the ruthenium / tin comparative layer composition, extensive mud-cracking on the sediment-like outer surface of the anode coating. In contrast, the coating made from the ternary base composition of the process of the invention showed an uncracked a coating of aggregated particles interspersed with voids.

## Claims

1. A process for the preparation of a catalytic anode structure for use in an electro-chlorination system, comprising the following sequential steps:
a) the preparation or obtention of an electrically conductive solid substrate; and
b) the application, to the electrolyte-facing surface of the substrate, of an electrically conductive metallurgical composition (i) comprising compounds of ruthenium, tin and titanium in amounts providing the composition (i) with the overall metallic stoichiometry Ru_{≥0.3} (Sn+Ti)_{≤0.7};
wherein the process solvent used for applying the metallurgical compositions in step (b) is a mixture of isopropanol and water in the ratio range of 80:20 to 95:5 by volume; and
wherein the resulting structure is thereafter dried, and then heat-treated at a temperature of at least 450°C.

2. The process of claim 1, wherein the substrate (a) is heated to a temperature in the range of 50-200°C during step (b), and the resulting structure thereafter dried at a temperature within the same range.

3. The process of claim 1 or claim 2 wherein the substrate (a) is heated to a temperature of 100°C throughout step (b), and the resulting structure thereafter dried at that temperature.

4. The process of any of claims 1 to 3 wherein, after drying, the heat-treatment temperature is in the range of 450 to 550°C.

5. The process of any of claims 1 to 4, wherein the heat-treatment temperature is 500°C.

6. The process of any of claims 1 to 5, wherein the process solvent used for applying the metallurgical compositions in step (b) is a mixture of isopropanol and water in the ratio range of 85:15 by volume.

7. The process of any of claims 1 to 6, wherein the metallurgical composition applied in step is sequentially applied by brush-coating in one or more passes over the underlying structure.

8. The process of any of claims 1 to 6, wherein the metallurgical composition applied in step (b) is sequentially applied by spray-coating in one or more passes over the underlying structure.

9. The process of any of claims 1 to 8, wherein composition (i) applied in step (b) comprises compounds of ruthenium, tin and titanium in amounts providing the composition (i) with the overall metallic stoichiometry Ru_{0.3} (Sn+Ti)_{0.70}.

10. The process of claim 9, wherein composition (i) applied in step (b) comprises compounds of ruthenium, tin and titanium in amounts providing the composition (i) with the overall metallic stoichiometry Ru_{0.3}Sn_{0.35}Ti_{0.35}.

11. The process of any of claims 1 to 10 wherein the composition (i) additionally comprises at least one compound of palladium, in an amount providing composition (i) with an overall palladium content of preferably at most 7 atom%, and preferably at most 5 atom%, based on the total metal atom content of composition (i).

12. The process of any of claims 1 to 11 wherein the ruthenium, tin, and titanium compounds present in composition (i) each comprise compounds other than oxide compounds; and wherein their heat treatment and, where present, their heated application in step (b), thermally decomposes these compounds into one or more of their respective metal oxide or mixed metal oxide compounds within the metallurgical layer of the final anode structure.

13. The process of claim 12, wherein the ruthenium, tin and titanium compounds present in composition (i) comprise, and preferably consist of, their respective halide or sulfate compounds, and/or complexes with acetylacetone.

14. The process of any of claims 1 to 13 wherein the composition (i) additionally comprises at least one compound of copper, or at least one compound of aluminium, or at least one compound of nickel, or more than one of the above; in amounts respectively providing composition (i) with an overall copper content of at most 10 atom%, and preferably at most 2 atom%, based on the total metal atom content of composition (i); or an overall aluminium content of at most 30 atom%, and preferably at most 20 atom% based on the total metal atom content of composition (iii); or an overall nickel content of at most 10 atom%, and preferably at most 10 atom% based on the total metal atom content of composition (i).

15. The process of any of claims 1 to 14 wherein the composition (i) additionally comprises at least one compound of iridium, in an amount respectively providing an overall iridium content of at most 15 atom%, and preferably at most 10 atom%, based on the total metal atom content of that composition.

16. The process of any of claims 1 to 15, wherein the electrically conductive solid substrate consists essentially of a valve metal, preferably titanium.

17. An electrolytic process for the evolution of chlorine gas from an aqueous solution containing chloride ions, which comprises:
(i) deploying the anode structure prepared according to any one of claims 1 to 16 in an electrolytic cell comprising an aqueous solution containing chloride ions; and
(ii) passing an electrical current through the electrolytic cell, wherein chlorine gas is evolved from the aqueous solution at the anode.

18. The electrolytic process of claim 17, wherein chlorine gas evolution from the aqueous solution is promoted by the catalytic action of the metallurgical layer overlaying the surface of the anode.

19. The electrolytic process of claim 17 or 18, wherein the chlorine gas evolved by the process is used as a biocide to disinfect water.

20. The electrolytic process of claim 19, wherein the chlorine gas is used to disinfect ballast water, or industrial or municipal waste water.

21. The electrolytic process of claim 17 or 18, wherein the process is a chlor-alkali process for the generation and recovery of chlorine.

22. The catalytic anode obtainable by the process of any of claims 1 to 16.

23. The catalytic anode obtained by the process of any of claims 1 to 16.
